# FASCICULE DE BREVET EUROPEEN

(11) **EP 4 449 146 B1**
(45) Date de publication et mention de la délivrance du brevet: **28.10.2026**
(21) Numéro de dépôt: 22840801.9
(22) Date de dépôt: 13.12.2022
(51) Int. Cl.: G01S 3/04, G01S 3/08, G01S 3/46, H01Q 21/24

(54) **PROCÉDÉ D'ESTIMATION DE LA DIRECTION D'ARRIVÉE D'UNE ONDE ÉLECTROMAGNÉTIQUE À UN RÉSEAU D'ANTENNES**
VERFAHREN ZUR SCHÄTZUNG DER EINFALLSRICHTUNG EINER ELEKTROMAGNETISCHEN WELLE AN EINER GRUPPENANTENNE
METHOD FOR ESTIMATING THE DIRECTION OF ARRIVAL OF AN ELECTROMAGNETIC WAVE AT AN ANTENNA ARRAY

(30) Priorité: 17.12.2021 FR 2113624
(43) Date de publication de la demande: 23.10.2024
(73) Titulaire: Safran Electronics & Defense, 75015 Paris (FR)
(72) Inventeur: GARCIA, Pierre-Antoine, 77550 MOISSY-CRAMAYEL (FR); LILBERT, Arnaud, 77550 MOISSY-CRAMAYEL (FR); CHIODINI, Alain Michel, 77550 MOISSY-CRAMAYEL (FR)
(74) Mandataire: Regimbeau
(86) Numéro de dépôt international: PCT/FR2022/052337
(87) Numéro de publication internationale: WO 2023/111449

(56) Documents cités:
- EP-B1- 2 435 847
- US-A1- 2012 086 605
- US-B1- 10 969 458
- US-B1- 7 015 857

## Description

### DOMAINE DE L'INVENTION

La présente invention concerne un procédé d'estimation de la direction d'arrivée d'une onde électromagnétique à un réseau d'antennes.

### ETAT DE LA TECHNIQUE

On connaît de l'état de la technique des procédés d'estimation de la direction d'arrivée d'une onde électromagnétique à un réseau d'antennes.

Certains de ces procédés sont associés à un réseau d'antennes toutes polarisées verticalement ou horizontalement. Or, lorsque la polarisation de l'onde incidente diffère des polarisations verticales ou horizontales, l'estimation de la direction d'arrivée est biaisée, ce qui est d'autant plus vrai lorsque la composante de polarisation croisée des antennes de réception ne peut être maîtrisée, lors notamment d'une intégration sur porteur. Le choix d'un procédé dépend donc de la capacité du réseau antennaire à fonctionner sur l'ensemble des polarisations linéaires voire elliptiques.

En particulier, le document EP2435847 décrit un procédé d'estimation de la direction d'arrivée d'une onde électromagnétique à un réseau d'antennes polarisées différemment, qui comprend des étapes conduisant à l'élaboration d'une fonction de coût C(Xj). Cette fonction de coût est le résultat de la somme de deux termes au carré. Cette fonction peut être représentée par une courbe, avec Xj en abscisse et C(Xj) en ordonnée. Il est identifié une valeur X₀ associée à un maximum de cette courbe, la valeur X₀ constituant une estimée de la direction d'arrivée de l'onde électromagnétique. Toutefois, ce procédé n'estime pas conjointement la direction d'arrivée et la polarisation de l'onde incidente.

### EXPOSE DE L'INVENTION

Un but de la présente divulgation est d'obtenir une estimée plus précise de la direction d'arrivée d'une onde électromagnétique à un réseau d'antennes.

Il est à cet effet proposé, selon un premier aspect, un procédé d'estimation de la direction d'arrivée d'une onde électromagnétique à un réseau d'antennes mis en œuvre par ordinateur, le procédé comprenant des étapes de :
- estimation d'une matrice de covariance de signaux acquis par le réseau d'antennes, les signaux étant issus de l'onde électromagnétique,
- calcul d'un vecteur propre normalisé de la matrice de covariance, le vecteur propre étant associé à une valeur propre de la matrice de covariance,
- corrélation du vecteur propre normalisé avec une première table de référence *A_{V}* de sorte à produire un premier spectre de corrélation comprenant des indices de corrélation respectivement associés à différentes directions d'arrivée, la première table de référence comprenant des réponses normalisées du réseau d'antennes à une première onde électromagnétique de référence polarisée dans une première direction respectivement associées à différentes directions d'arrivée de la première onde électromagnétique de référence,
- corrélation du vecteur propre normalisé avec une deuxième table de référence de sorte à produire un deuxième spectre de corrélation comprenant des indices de corrélation respectivement associés à différentes directions d'arrivée, la deuxième table de référence comprenant des réponses normalisées du réseau d'antennes à une deuxième onde électromagnétique de référence polarisée dans une deuxième direction respectivement associées à différentes directions d'arrivée de la deuxième onde électromagnétique de référence, la deuxième direction étant différente de la première direction,
- construction d'une troisième table de référence par combinaison linéaire de la première table de référence et de la deuxième table de référence avec respectivement une composante de polarisation de l'onde électromagnétique dans la première direction et une composante de polarisation de l'onde électromagnétique dans la deuxième direction,
- corrélation du vecteur propre normalisé avec la troisième table de référence de sorte à produire un troisième spectre de corrélation comprenant des indices de corrélation associés à différentes directions d'arrivée,
- identification d'une direction d'arrivée associée à un indice de corrélation maximal du troisième spectre de corrélation.
le procédé selon le premier aspect comprend en outre des étapes de :
- sélection d'une direction d'arrivée associée à un indice de corrélation maximal du premier spectre de corrélation ou du deuxième spectre de corrélation,
- construction d'une table de recherche en polarisation à partir d'une première réponse normalisée du réseau d'antennes à la première onde électromagnétique de référence, la première réponse normalisée étant associée dans la première table de référence à la direction d'arrivée sélectionnée, et à partir d'une deuxième réponse normalisée du réseau d'antennes à la deuxième onde électromagnétique de référence, la deuxième réponse normalisée étant associée dans la deuxième table de référence à la direction d'arrivée sélectionnée,
- corrélation du vecteur propre normalisé avec la table de recherche en polarisation, de sorte à obtenir un quatrième spectre de corrélation comprenant des indices de corrélation associés à différentes valeurs complexes,
- ajustement de la composante de polarisation de l'onde électromagnétique dans la deuxième direction à une valeur complexe associée à un indice de corrélation maximal du quatrième spectre de corrélation, puis normalisation d'un vecteur de polarisation formé par les composantes de polarisation de l'onde électromagnétique dans la première direction et la composante de polarisation de l'onde électromagnétique dans la deuxième direction, la construction de la troisième table de référence étant mise en œuvre après la normalisation du vecteur de polarisation.

Un avantage du procédé proposé et qu'il propose conjointement d'estimer conjointement la direction d'arrivée ainsi que la polarisation de l'onde incidente, ce qui permet, avec le choix du réseau d'antennes adéquat, une intégration de ce dernier très près du véhicule porteur.

Le procédé selon le premier aspect peut comprendre également les caractéristiques suivantes, prises seules ou en combinaison lorsque cela est techniquement possible.

De préférence, le premier spectre de corrélation comprend un premier indice de corrélation maximal et deuxième spectre de corrélation comprend un deuxième indice de corrélation maximal, et la direction d'arrivée sélectionnée à l'étape de sélection est :
- une direction d'arrivée associée au premier indice de corrélation maximal dans le premier spectre de corrélation, lorsque le premier indice de corrélation maximal est supérieur au deuxième indice de corrélation maximal,
- une direction d'arrivée associée au deuxième indice de corrélation maximal dans le deuxième spectre de corrélation, lorsque le premier indice de corrélation maximal n'est pas supérieur au deuxième indice de corrélation maximal.

De préférence, le procédé selon le premier aspect comprend la création d'un espace de recherche comprenant différentes valeurs pour une variable complexe, et dans lequel la construction de la table de recherche en polarisation comprend une combinaison linéaire de la première réponse et de la deuxième réponse avec respectivement la composante de polarisation de l'onde électromagnétique dans la première direction et un poids dépendant du module de la deuxième composante de polarisation de l'onde électromagnétique et d'une des différentes valeurs pour la variable complexe, la combinaison linéaire étant répétée pour chacune des différentes valeurs.

De préférence, le procédé selon le premier aspect comprend des étapes de :
- mise à jour de la direction d'arrivée sélectionnée à la valeur de la direction d'arrivée identifiée,
- mise à jour de l'espace de recherche en un nouvel espace de recherche incluant la composante de polarisation de l'onde électromagnétique dans la deuxième direction du vecteur de polarisation obtenue à l'issue de l'étape de normalisation, puis
- répétition des étapes de sélection, construction d'une table de recherche en polarisation, corrélation du vecteur propre normalisé avec la table de recherche en polarisation, ajustement, construction d'une troisième table de référence, corrélation du vecteur propre normalisé avec la troisième table de référence, et identification d'une direction d'arrivée.

De préférence, l'espace de recherche forme une spirale dans le plan complexe, et la mise à jour de l'espace de recherche comprend une dilatation de la spirale, de sorte que le nouvel espace de recherche forme une nouvelle spirale dans le plan complexe qui est dilatée par rapport à la spirale.

De préférence, le procédé selon le premier aspect comprend en outre une comparaison entre l'indice de corrélation maximal du troisième spectre de corrélation *S_{PP}* et un seuil prédéfini, ladite répétition n'étant mise en œuvre que si l'indice de corrélation maximal du troisième spectre de corrélation est inférieur au seuil prédéfini.

De préférence, la première direction et la deuxième direction sont orthogonales.

Il est également proposé, selon un deuxième aspect, une mémoire lisible par ordinateur stockant des instructions exécutables par l'ordinateur pour l'exécution des étapes du procédé selon le premier aspect.

Il est également proposé, selon un troisième aspect, un dispositif d'estimation de la direction d'arrivée d'une onde électromagnétique à un réseau d'antennes, le dispositif d'estimation comprenant au moins un processeur configuré pour mettre en œuvre le procédé selon le premier aspect.

Il est également proposé, selon un quatrième aspect, un système comprenant :
- un réseau d'antennes configuré pour acquérir des signaux issus d'une onde électromagnétique,
- un dispositif d'estimation de la direction d'arrivée de l'onde électromagnétique au réseau d'antennes sur la base des signaux, le dispositif d'estimation étant conforme au troisième aspect.

Il est également proposé un porteur mobile, tel qu'un aéronef, comprenant un système selon le quatrième aspect.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
La figure 1 illustre de façon schématique un système selon un mode de réalisation.
La figure 2 est un organigramme d'étapes d'un procédé susceptible d'être mis en mis en œuvre par le système de la figure 1.
La figure 3 est un organigramme d'étapes d'un procédé d'estimation de la direction d'arrivée d'une onde électromagnétique à un réseau d'antennes, selon un mode de réalisation.
La figure 4 est un diagramme représentant des valeurs propres et des indices associés, ces valeurs propres étant impliquées dans le procédé de la figure 3.
La figure 5 représente deux courbes formées par des spectres de corrélation *S_{PV}, S_{PH}* calculés au cours d'une mise en œuvre du procédé de la figure 3.
La figure 6 est un organigramme détaillant un mode de réalisation d'une étape du procédé de la figure 3.
La figure 7 représente un espace de recherche pour une variable complexe p, dans le plan complexe.
La figure 8a représente une courbe formée par un spectre *S_{P}* calculé au cours d'une itération du procédé de la figure 3, ce spectre étant fonction de la variable complexe p.
La figure 8b représente les deux courbes de la figure 5 ainsi qu'une courbe formée par une autre spectre de corrélation *S_{PP}* calculés au cours d'une itération du procédé de la figure 3.
La figure 9a représente une courbe formée par un spectre *S_{P}* calculé au cours d'une autre itération du procédé de la figure 3, ce spectre étant fonction de la variable complexe p.
La figure 9b représente les deux courbes de la figure 5 ainsi qu'une courbe formée par une autre spectre de corrélation *S_{PP}* calculé au cours d'une autre itération du procédé de la figure 3.

Sur l'ensemble des figures, les éléments similaires portent des références identiques.

### DESCRIPTION DETAILLEE DE L'INVENTION

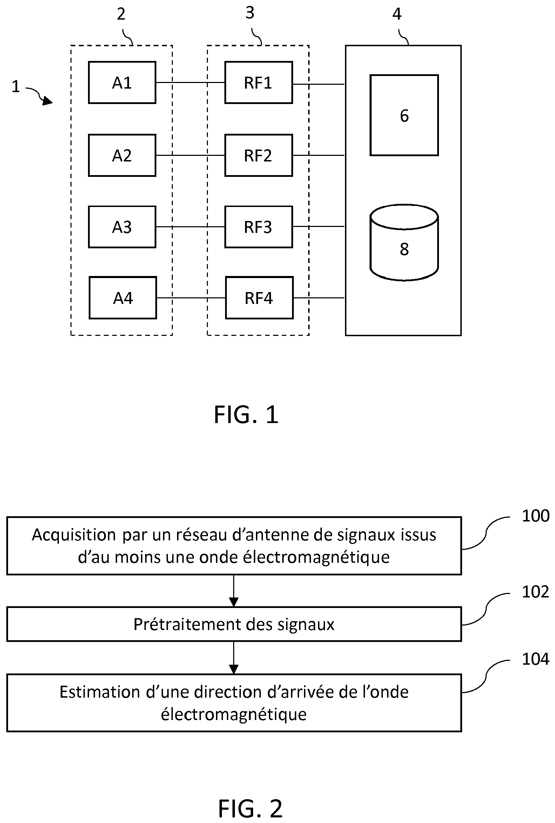

En référence à la **figure 1****,** un système 1 comprend un réseau d'antennes 2, une pluralité de voies 3 et un dispositif 4 d'estimation de la direction d'arrivée d'une onde électromagnétique au réseau d'antennes 2.

Le réseau d'antennes 2 comprend une pluralité d'éléments antennaires radio A1-A4 (quatre éléments antennaires dans l'exemple non limitatif illustré). Le nombre d'antennes est quelconque.

Chaque élément antennaire du réseau d'antennes 2 est relié au dispositif d'estimation par une des voies faisant partie de la pluralité de voies 3. Chaque voie peut comprendre des composants connus de l'homme du métier qui appliquent des traitements à des signaux acquis par l'élément antennaire correspondant. Ces composants comprennent typiquement un bloc d'entrée RF (RF front end en anglais), et un convertisseur analogique numérique-analogique en aval du bloc d'entrée RF. On a représenté sur la figure 1 sur chaque voie un bloc d'entrée RF, ces blocs étants désignés par les références RF1 à RF4.

Le dispositif d'estimation est agencé pour recevoir des signaux ayant transité par la pluralité de voies 3.

Le dispositif 4 d'estimation comprend au moins un processeur 6 et une mémoire 8.

Le ou chaque processeur 6 est configuré pour exécuter un programme d'estimation de direction d'arrivée, comprend des instructions de code. Lors de cette exécution, le processeur met en œuvre un procédé d'estimation de direction d'arrivée qui sera décrit plus loin.

La mémoire 8 est lisible par le ou chaque processeur, et stocke le programme d'estimation de direction d'arrivée.

Sont par ailleurs stockées dans la mémoire une première table de référence *A_{V},* et une deuxième table de référence *A_{H}.*

La première table de référence *A_{V}* comprend des réponses normalisées du réseau d'antennes 2 à une première onde électromagnétique de référence polarisée dans une première direction de polarisation, les réponses étant respectivement associées à différentes directions d'arrivée de la première onde électromagnétique de référence.

Dans la présente divulgation, une direction d'arrivée se réfère implicitement à une orientation dans l'espace, c'est-à-dire des données angulaires. Par exemple, une direction d'arrivée peut se caractériser par un angle d'azimut et un angle d'élévation.

La première table de référence *A_{V}* est obtenue par un procédé de calibration comprenant les étapes suivantes. Un émetteur est placé à une certaine distance du réseau d'antennes 2, dans une position prédéterminée. L'émetteur émet la première onde électromagnétique de référence discutée précédemment, c'est-à-dire une onde polarisée dans la première direction de polarisation. Cette onde est reçue par le réseau d'antennes 2 selon une certaine direction d'arrivée. Des signaux sont acquis par le réseau d'antennes 2 sur la base de cette onde, et ces signaux sont traités de sorte à obtenir un vecteur constituant une réponse normalisée du réseau d'antennes 2 à la première onde de référence, ce vecteur étant associé à la direction d'arrivée de l'onde. Ensuite, l'émetteur est placé dans une nouvelle position, par rotation de l'émetteur autour du réseau d'antennes 2 selon un certain pas angulaire. Les étapes qui précèdent sont répétées alors que l'émetteur est dans cette nouvelle position de sorte à obtenir un nouveau vecteur associé à une nouvelle direction d'arrivée de la première onde de référence. En répétant ces étapes pour différentes positions de l'émetteur autour du réseau d'antennes 2, on obtient une pluralité de vecteurs qui forment la table de référence *A_{V}.*

Similairement, la deuxième table de référence *A_{H}* comprend des réponses normalisées du réseau d'antennes 2 à une deuxième onde électromagnétique de référence polarisée dans une deuxième direction de polarisation, les réponses étant respectivement associées à différentes directions d'arrivée de la deuxième onde électromagnétique de référence.

La deuxième onde électromagnétique de référence diffère de la première onde électromagnétique de référence. En effet, la deuxième direction de polarisation est différente de la première direction de polarisation. En outre, la deuxième onde de référence peut présenter une polarisation d'inclinaison et/ou d'ellipticité différente de la première onde électromagnétique de référence.

La deuxième table de référence *A_{H}* est obtenu au moyen du même procédé de calibration que celui utilisé pour obtenir la première table de référence *A_{V},* à ceci près que l'onde de référence émise par l'émetteur est polarisée dans la deuxième direction, et non dans la première direction.

Dans ce qui suit, on supposera que la deuxième direction de polarisation est perpendiculaire à la première direction de polarisation, étant entendu qu'il s'agit d'un exemple non limitatif. Dans ce qui suit, la première direction de polarisation sera appelée « direction verticale », et la deuxième direction de polarisation sera appelée « direction horizontale ».

Le système 1 peut avantageusement être utilisé pour recevoir des signaux émanant de satellites de positionnement (GNSS). Dans cette application particulière, estimer la direction d'arrivée d'une onde électromagnétique est utile pour détecter des brouillages ou des leurrage.

Le système 1 peut typiquement être embarqué dans un porteur mobile, tel qu'un aéronef.

On va maintenant décrire un procédé mis en œuvre par le système 1 en relation avec la figure 2. Ce procédé comprend les étapes suivantes.

Dans une étape d'acquisition 100, le réseau d'antennes 2 reçoit une au moins une onde électromagnétique s'étant propagée dans une certaine direction, cette onde transportant un signal utile. Par convention, on appelle direction d'arrivée d'une onde la direction de propagation d'une telle onde au moment où l'onde parvient au réseau d'antennes 2. Cette direction d'arrivée n'est pas connue *a priori* par le système 1.

Chaque onde électromagnétique reçue par le réseau d'antennes 2 est polarisée dans une certaine direction, appelée dans la suite direction de polarisation. Cette direction de polarisation n'est pas connue *a priori,* mais peut être exprimée sous la forme d'un vecteur de polarisation P, appelé vecteur de Jones dans la littérature. Le vecteur de polarisation P comprend une composante de polarisation dans la première direction P1 (composante verticale) et une composante P2 dans la deuxième direction (composante horizontale). Ainsi, la détermination de ces deux composantes P1, P2 permettrait de connaître la direction de polarisation de l'onde électromagnétique.

Une onde électromagnétique peut par exemple avoir été émise par un satellite de positionnement faisant partie d'une constellation de satellites GNSS (GPS, GALILEO, GLONASS, etc.).

Le réseau d'antennes 2 produit des signaux analogiques issus de l'onde électromagnétique. Plus précisément, chaque élément antennaire du réseau d'antennes 2 produit un signal électrique analogique sur la base de l'onde l'électromagnétique reçue.

Dans une étape de prétraitement 102, les N signaux analogiques sont traités par les voies 3. En particulier, les N signaux analogiques sont convertis en N signaux numériques, chaque signal numérique comprenant T échantillons.

Les signaux analogiques forment une matrice d'acquisition X comprenant N lignes et T colonnes. Cette matrice d'acquisition X contient un signal utile S bruité. La matrice d'acquisition X peut se décomposer comme suit : $X = AS + B$ où A est une matrice représentative de la réponse du système 1 (en particulier la réponse du réseau d'antennes 2 et de la pluralité de voies 3), et où B est un bruit.

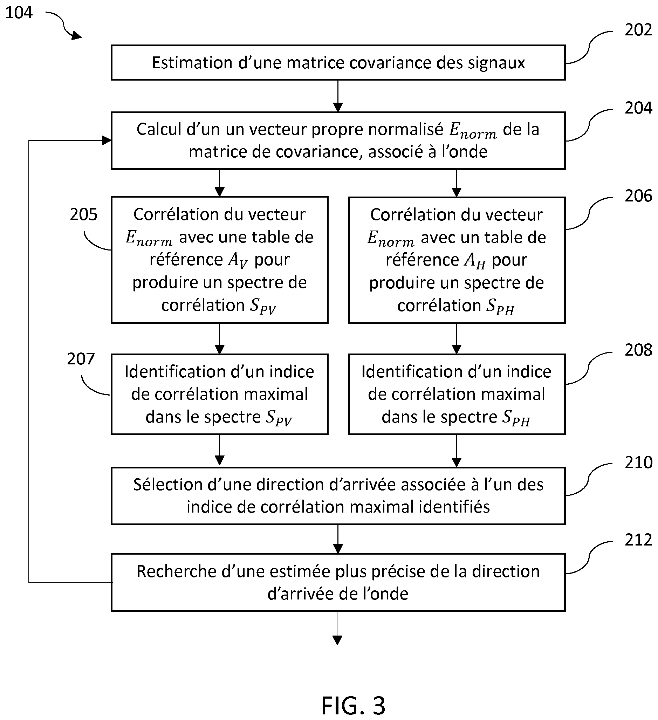

Dans une étape 104, le dispositif d'estimation 4 met en œuvre un procédé estimant la direction d'arrivée de l'onde électromagnétique reçue par le réseau d'antennes 2. En référence à la figure 3, ce procédé d'estimation 104 comprend les étapes suivantes.

Dans une étape 202, le dispositif d'estimation 4 calcule une estimée $\hat{{R}_{xx}}$ de la matrice de covariance des signaux numériques. Pour cela, le dispositif d'estimation 4 applique le calcul suivant : $\hat{{R}_{xx}} = \frac{1}{T} {XX}^{H}$

Ici, l'opérateur H désigne la transposition d'une matrice et la conjugaison des valeurs de cette matrice transposée (opérateur « transposé-conjugué »).

Dans une étape 204, le dispositif d'estimation 4 calcule au moins un vecteur propre normalisé *Eₙₒᵣₘ* de la matrice de covariance, le vecteur propre étant associé à une valeur propre de la matrice de covariance.

Lorsqu'une seule onde a été reçue par le réseau d'antennes 2 lors de l'étape d'acquisition 100, un seul vecteur *Eₙₒᵣₘ* est calculée à l'étape 204.

Dans ce cas, le vecteur *Eₙₒᵣₘ* peut être obtenu en exploitant et en normalisant une colonne de la matrice de covariance, par exemple sa première colonne. Dans ce cas, le dispositif d'estimation 4 effectue les calculs suivants : $E = \hat{{R}_{xx}} \left(:1\right)$ ${E}_{norm} = \frac{E}{\sqrt{{E}^{H} E}}$

Lorsque plusieurs ondes ont été reçues simultanément par le réseau d'antennes 2 lors de l'étape d'acquisition 100, un ou plusieurs vecteurs *Eₙₒᵣₘ* peuvent être calculée à l'étape 204, chaque vecteur calculé étant associé à une onde électromagnétique reçue.

Dans ce cas, les différents vecteurs *Eₙₒᵣₘ* sont calculés à l'étape 204 de la manière suivante.

Le dispositif d'estimation 4 décompose l'estimée de la matrice de covariance $\hat{{R}_{xx}}$ en valeurs singulières (cette décomposition étant généralement abrégée dans la littérature en SVD, pour « singular value decomposition »). Les propriétés de $\hat{{R}_{xx}}$ sont telles que : $\hat{{R}_{xx}} = {UΣV}^{H}$ ou :
- U désigne la matrice contenant les vecteurs propres dits « gauches »
- Σ désigne la matrice contenant les valeurs propres
- V^{H} désigne la matrice contenant les vecteurs propres dits « droits »

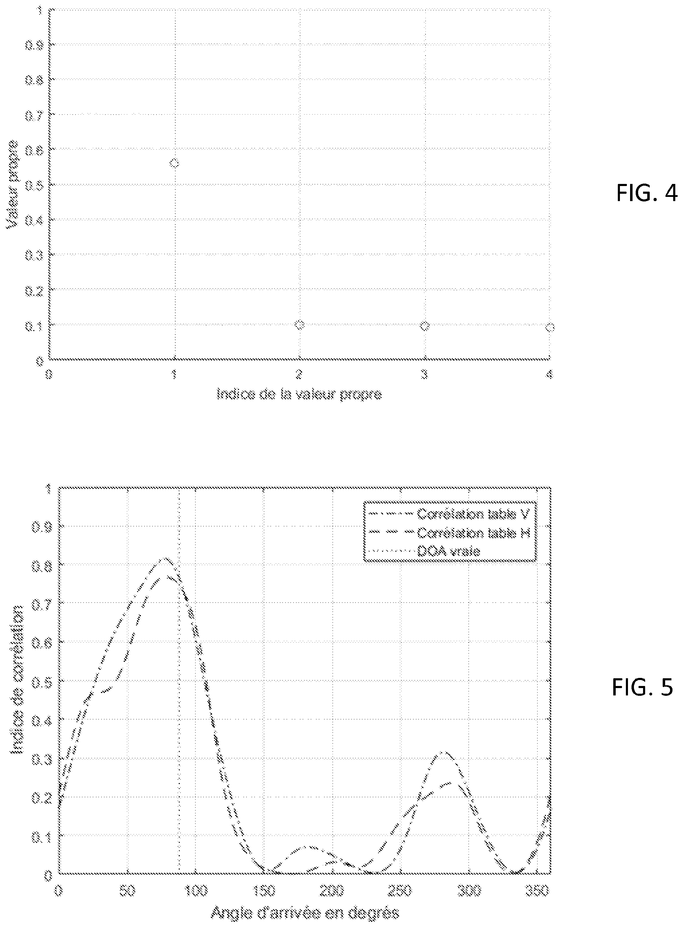

L'analyse des valeurs propres contenues sur la diagonale de la matrice Σ permet de décider combien de vecteurs propres (vecteurs colonnes de la matrice U) peuvent être affectés à un vecteur *Eₙₒᵣₘ.* Cette étape d'analyse s'appelle le « dénombrement ». Pour toute valeur propre Σ(N,N) supérieure à un seuil, le vecteur propre associé U(:,N) est associé à un vecteur *Eₙₒᵣₘ* (l'étape de normalisation est naturelle lors de la décomposition en valeurs singulières). La **figure 4** illustre un exemple de dénombrement dans lequel on a quatre valeurs propres. Dans cet exemple, seul le premier vecteur propre est affecté à un vecteur E*Eₙₒᵣₘ,* soit : ${E}_{norm} = U \left(:,1\right)$

Dans la suite, sont détaillés des traitements qui sont appliqués à un vecteur *Eₙₒᵣₘ* calculé à l'étape 204. Il est entendu que ces traitements peuvent être répétés pour chaque vecteur *Eₙₒᵣₘ* calculé à l'étape 204, s'il y en a plusieurs.

Dans une étape de corrélation 205, le dispositif corrèle le vecteur *Eₙₒᵣₘ* avec la première table de référence *A_{V}* de sorte à produire un premier spectre de corrélation *S_{PV}* comprenant des indices de corrélation respectivement associés à différentes directions d'arrivée.

Dans une étape de corrélation 206, le dispositif d'estimation 4 corrèle le vecteur *Eₙₒᵣₘ* avec la deuxième table de référence *A_{H}* de sorte à produire un deuxième spectre de corrélation *S_{PH}* comprenant des indices de corrélation respectivement associés à différentes directions d'arrivée.

Ces corrélations 205, 206 peuvent être réalisées via les calculs suivants : ${S}_{PV} = {\left(abs\left({A}_{V}^{H}{E}_{norm}\right)\right)}^{2}$ ${S}_{PH} = {\left(abs\left({A}_{H}^{H}{E}_{norm}\right)\right)}^{2}$

Dans ces expressions, « abs » désigne une valeur absolue.

Les corrélations 205, 206 peuvent être mises en œuvre en parallèle ou séquentiellement.

Sont illustrées en **figure 5** deux courbes représentatives d'exemples de spectres *S_{PV}* et *S_{PH}* obtenus à partir d'une onde électromagnétique de référence dont la direction d'arrivée était connue à l'avance. Les indices de corrélations sont en ordonnée, et les directions d'arrivée associées sont exprimées en abscisse comme des angles en degrés. On constate que les courbes représentatives des spectres *S_{PV}* et *S_{PH}* présentent des maximas assez proches de la vraie direction d'arrivée de l'onde électromagnétique reçue par le réseau d'antennes 2 à l'étape d'acquisition. Toutefois, ces deux maximas sont différents, et ne correspondent pas précisément à la vraie direction d'arrivée de cette onde.

Le but des étapes suivantes du procédé est justement d'estimer de manière précise la vraie direction d'arrivée, à partir des deux spectres de corrélations spectres *S_{PV}* et *S_{PH}.*

Dans une étape 207, le dispositif d'estimation 4 identifie l'indice de corrélation maximal du premier spectre de corrélation.

Dans une étape 208, le dispositif d'estimation 4 identifie l'indice de corrélation maximal du deuxième spectre de corrélation.

Dans une étape 210, le dispositif d'estimation 4 sélectionne une direction d'arrivée associée à un indice de corrélation maximal du premier spectre de corrélation ou du deuxième spectre de corrélation.

Avantageusement, au cours de l'étape 210, le dispositif d'estimation 4 compare l'indice de corrélation maximal du spectre *S_{PV}* avec l'indice de corrélation maximal du spectre *S_{PH},* et sélectionne le plus grand des deux. La direction sélectionnée est celle associée au plus grand des deux maximas. Cette sélection particulière permet de converger plus rapidement vers une estimation précise de la direction d'arrivée de l'onde électromagnétique reçue.

Dans une étape 212, le dispositif d'estimation 4 recherche une estimée plus précise de la direction d'arrivée de l'onde électromagnétique reçue par le réseau d'antenne.

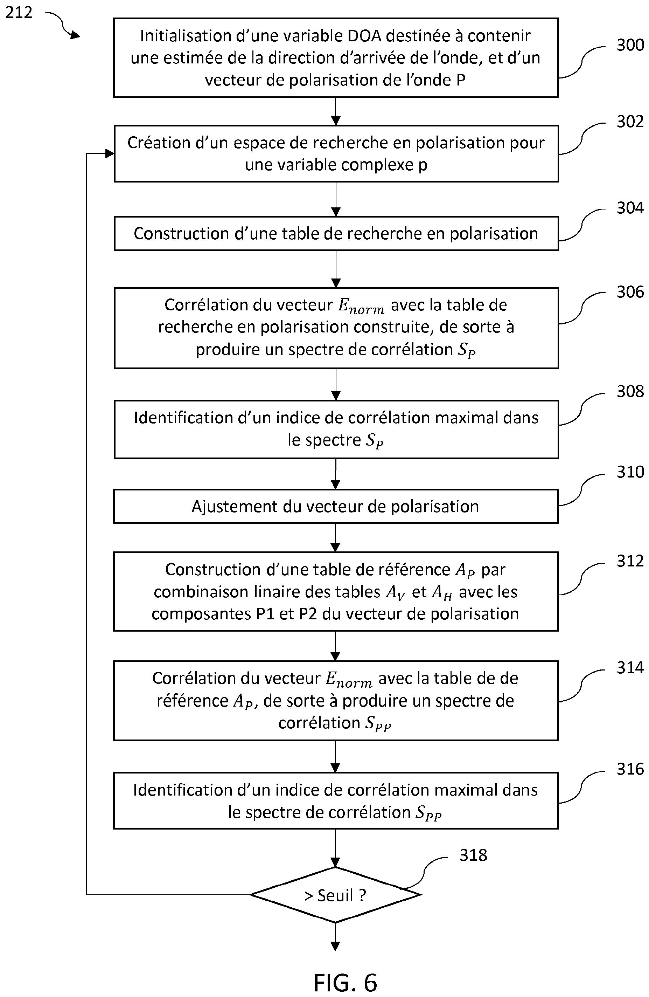

En référence à la **figure 6****,** cette recherche 212 comprend une étape d'initialisation 300.

Lors de l'étape d'initialisation 300, le dispositif d'estimation 4 initialise une variable DOA destinée à contenir une estimée de la direction d'arrivée de l'onde électromagnétique reçue. Cette variable DOA est initialisée à l'aide de la direction d'arrivée sélectionnée lors de l'étape 210.

Par ailleurs, à l'étape d'initialisation 300, le dispositif d'estimation 4 initialise un vecteur de polarisation *P* = [*P*1 *P*2] de l'onde. Plus précisément, la composante en polarisation verticale P1 et la composante en polarisation horizontale P2 de ce vecteur P sont initialisées à des valeurs initiales. A ce stade, on ne connait pas la polarisation de l'onde électromagnétique reçue ; les valeurs initiales du vecteur de polarisation P de cette onde ne reflètent donc pas la réalité.

La recherche 212 comprend, après l'initialisation 300, une boucle itérative. Comme on le verra par la suite, cette boucle itérative fournit non seulement une estimée précise de la direction d'arrivée de l'onde électromagnétique reçue par le réseau d'antenne, mais fournit également une estimation précise de la direction de la polarisation de cette onde.

De manière générale, une itération de la boucle prend en entrée la variable DOA et le vecteur de polarisation P.

En particulier, la première itération de la boucle itérative prend en entrée la direction d'arrivée sélectionnée précédemment à l'étape 210 (et qui, comme on l'a vu, demande à être affinée) et le vecteur de polarisation P tel qu'initialisé (et qui ne constitue donc pas une bonne estimation de la direction de polarisation de l'onde électromagnétique reçue).

La première itération (itération d'indice 1) comprend les étapes suivantes.

Dans une étape 302, le dispositif d'estimation 4 crée un espace de recherche pour une variable complexe p. Cet espace de recherche inclut la valeur initiale de la composante P2 (considérée comme un nombre complexe) qui a été obtenue à l'issue de l'initialisation 300.

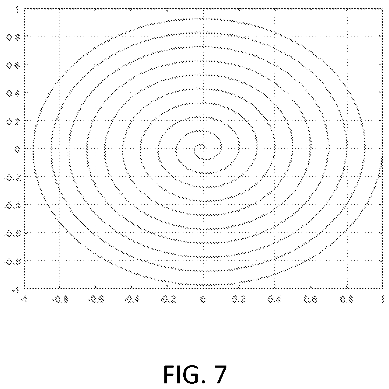

Avantageusement, l'espace de recherche forme une spirale dans le plan complexe, comme dans l'exemple de la **figure 7****.** Autrement dit, l'espace de recherche comprend une pluralité de valeurs pour la variable complexe p, cette pluralité de valeurs pouvant être représentée comme une pluralité de points qui se trouvent sur une telle spirale (la partie réelle d'une valeur est en abscisse et la partie imaginaire de cette valeur est en ordonnée dans le plan complexe).

La spirale est caractérisée par deux paramètres : une plage d'angles de parcours de la spirale (paramètre variable qui va influer sur le nombre de tours parcourus par la spirale), et un coefficient de normalisation de la taille de la spirale (paramètre fixe). Le rayon maximal de p est de 1.

Dans une étape 304, le dispositif d'estimation 4 construit ensuite une table de recherche en polarisation.

Pour construire cette table de recherche en polarisation à l'étape 304, le dispositif d'estimation 4 détermine une première réponse normalisée du réseau d'antennes 2 à la première onde électromagnétique de référence (polarisée verticalement), la première réponse normalisée étant associée, dans la première table de référence *A_{V},* à la direction d'arrivée contenue dans la variable DOA (cette direction d'arrivée étant celle ayant été sélectionnée avant la boucle itérative dans le cas de la première itération de la boucle).

On a vu précédemment que la première table de référence *A_{V}* comprend des réponses normalisées du réseau d'antennes 2 à la première onde électromagnétique de référence (polarisée verticalement), ces réponses normalisées étant associées à différentes directions d'arrivée de la première onde électromagnétique de référence. La première réponse normalisée est le vecteur qui est associé spécifiquement à la direction d'arrivée ayant été sélectionnée auparavant. Cette première réponse peut constituer une colonne de la première table de référence *A_{V},* ou bien être calculée sur la base du contenu de cette table. En quelque sorte, la première table de référence *A_{V}* peut être vue comme une fonction Table1() qui indique comme évolue une réponse normalisée en fonction d'une direction d'arrivée. C'est pourquoi on note la première réponse normalisée *Table*1(*DOA*)*.*

Par ailleurs, pour construire la table de recherche en polarisation à l'étape 304, le dispositif d'estimation 4 détermine deuxième réponse normalisée du réseau d'antennes 2 à la deuxième onde électromagnétique de référence, la deuxième réponse normalisée étant associée dans la deuxième table de référence *A_{H}* à la direction d'arrivée contenue dans la variable DOA. On note cette deuxième réponse normalisée *Table*2(*DOA*)*.*

La table de recherche en polarisation est calculée à partir de la première réponse normalisée *Table*1(*DOA*)*,* de la deuxième réponse normalisée *Table*2(*DOA*)*,* du paramètre R, et de la variable complexe p.

Plus précisément, la table de recherche en polarisation résulte du calcul suivant mis en œuvre par le dispositif d'estimation 4, pour chaque valeur de la variable complexe p faisant partie de l'espace de recherche créé à l'étape 302 : $P 1 ∗ Table 1 \left(DOA\right) + R ∗ p ∗ \left|P2\right| ∗ Table 2 \left(DOA\right)$

Dans cette équation, l'étoile * désigne une multiplication, |*P*2| désigne le module de P2, considéré être un nombre complexe, et R désigne un coefficient de dilatation de la spirale discutée précédemment. R vaut 1 à la première mise en œuvre de l'étape 304.

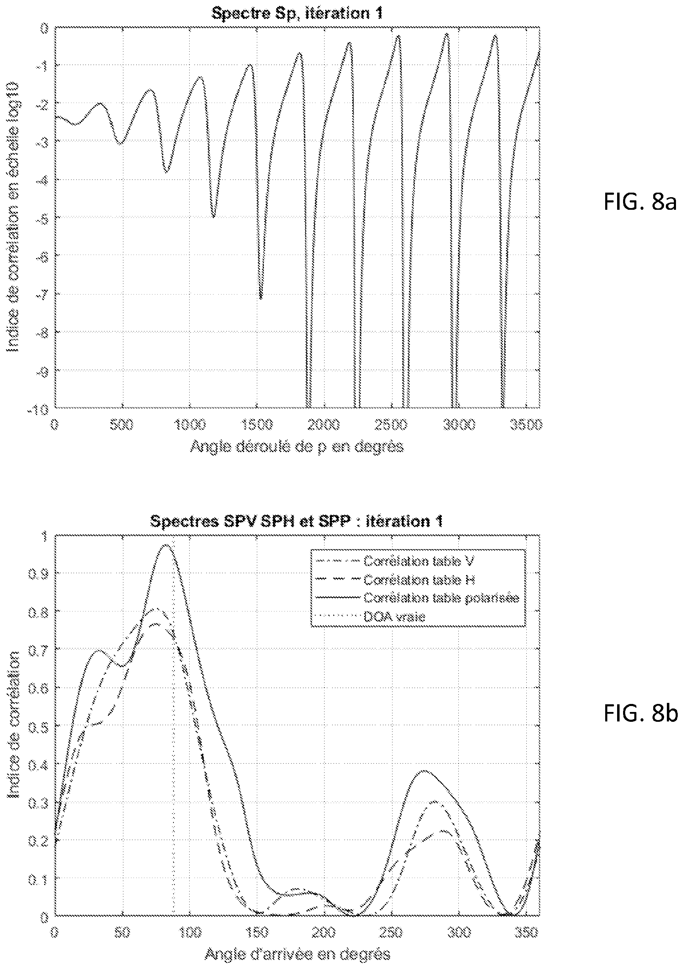

Dans une étape de corrélation 306, le dispositif d'estimation 4 corrèle le vecteur propre normalisé *Eₙₒᵣₘ* avec la table de recherche en polarisation ainsi construite, de sorte à obtenir un spectre de corrélation *S_{P}* comprenant des indices de corrélation associés à différentes valeurs complexes de la variable p. Ce spectre de corrélation *Sₚ*, dont un exemple est représenté en **figure 8a****,** n'est pas de même nature que les spectres *S_{PV}* et *S_{PH},* car il représente une corrélation en fonction d'une variable p de polarisation, et non en fonction d'une direction d'arrivée.

Dans une étape 308, le dispositif d'estimation 4 identifie un indice de corrélation maximal du spectre de corrélation *Sₚ*, ainsi que la valeur complexe p2 associée.

Dans une étape d'ajustement 310, le dispositif d'estimation 4 ajuste le vecteur P de la manière suivante : la composante P2 est ajustée à la valeur complexe p2 associée à l'indice de corrélation maximal du spectre de corrélation *Sₚ*, puis le vecteur ainsi obtenu est normalisé. Au cours de cette normalisation, les composante P1 et P2 sont ajustées de telle sorte que la norme du vecteur soit égale à 1.

Le vecteur P ainsi obtenu après cette étape d'ajustement 310 constitue une estimée plus précise (c'est-à-dire plus proche de la véritable direction de polarisation de l'onde électromagnétique reçue) que le vecteur P avant son ajustement.

Dans une étape de construction 312, le dispositif d'estimation 4 construit une troisième table de référence *A_{P}* par combinaison linéaire de la première table de référence *A_{V}* et de la deuxième table de référence *A_{H}* avec respectivement la composante P1 et la composante P2, après que le vecteur de polarisation P a été ajusté à l'étape 310.

Cette combinaison linéaire s'exprime ainsi : ${A}_{P} = P 1 ∗ {A}_{V} + P 2 ∗ {A}_{H}$ ou, si l'on reprend les notations Table1 et Table2 pour désigner les deux tables de référence précitées : ${A}_{P} = P 1 ∗ Table 1 + P 2 ∗ Table 2$

Comme cela sera illustré dans la suite, la table *A_{P}* résultant de cette combinaison linéaire constitue une base plus fiable que les tables de références *A_{V}* et *A_{H},* pour estimer de manière plus précise la direction d'arrivée de l'onde électromagnétique reçue.

Dans une étape de corrélation 314, le dispositif d'estimation 4 corrèle le vecteur propre normalisé *Eₙₒᵣₘ* avec la table de référence *A_{P}* de sorte à produire un spectre de corrélation *S_{PP}* comprenant des indices de corrélation associés à différentes directions d'arrivée. Cette étape de corrélation 316 est similaire aux étapes 205 et 206.

Sont illustrées en **figure 8b** les courbes représentatives des spectres *S_{PV}* et *S_{PH}* de la figure 4 superposées avec une courbe représentative du spectre de corrélation *S_{PP}* calculée au cours de la première mise en œuvre de l'étape 314. On constate que la courbe représentative du spectre *S_{PP}* présente un maximum beaucoup plus proche de la vraie direction d'arrivée de l'onde électromagnétique reçue par le réseau d'antennes 2 que les maximas des spectres *S_{PV}* et *S_{PH}.*

Dans une étape 316, le dispositif d'estimation 4 identifie un indice de corrélation maximal du spectre de corrélation *S_{PP}.* La variable DOA est ajustée à la direction d'arrivée associée à cet indice maximal.

La direction d'arrivée associée à l'indice de corrélation maximal du spectre de corrélation *S_{PP}* constitue une nouvelle estimation de la direction d'arrivée de l'onde électromagnétique reçue, affinée par rapport à la direction d'arrivée sélectionnée dans l'une des spectres *S_{PV}* et *S_{PH}* à l'étape 210.

Dans une étape 318, le dispositif d'estimation 4 compare la variable DOA mise à jour avec un seuil prédéfini.

Si la variable DOA mise à jour (contenant l'indice de corrélation maximal du spectre de corrélation *S_{PP}*) s'avère supérieure au seuil, alors la boucle itérative est terminée. Dans ce cas, il est en effet considéré que le maximum du spectre de corrélation *S_{PP}* identifié à l'étape 318 constitue une estimée suffisamment précise de la direction d'arrivée de l'onde électromagnétique reçue.

Si au contraire la variable DOA mise à jour (contenant l'indice de corrélation maximal du spectre de corrélation *S_{PP}*) n'est pas supérieure au seuil, alors une nouvelle itération de la boucle itérative est mise en œuvre (itération d'indice 1).

L'itération d'indice 1 prend en entrée la variable DOA et le vecteur de polarisation P tels qu'ajustés au cours de la première itération. Dans cette nouvelle itération, les étapes 302, 304, 306, 308, 310, 312, 314, 316 et 318 sont à nouveau mise en œuvre, comme dans l'itération précédente.

Un nouvel espace de recherche est créé lors de la nouvelle la mise en œuvre de l'étape 302, par mise à jour de l'espace de recherche précédemment créé. Ce nouvel espace de recherche inclut la composante P2 (considérée comme un nombre complexe) qui a été obtenue à l'issue de la précédente mise en œuvre de l'étape 310.

De préférence, le nouvel espace de recherche forme une nouvelle spirale passant par le point P2 dans le plan complexe, la nouvelle spirale étant dilatée par rapport à la précédente spirale. Par « dilatée », on entend que la distance radiale entre deux spires successives de la nouvelle spirale est supérieure à la distance radiale entre deux spires successives de la précédente spirale. Cette dilatation peut être caractérisée par un coefficient de dilatation R > 1. C'est cette nouvelle valeur de R qui est utilisée ensuite lors du calcul d'une nouvelle table de recherche en polarisation, au cours de l'étape 304.

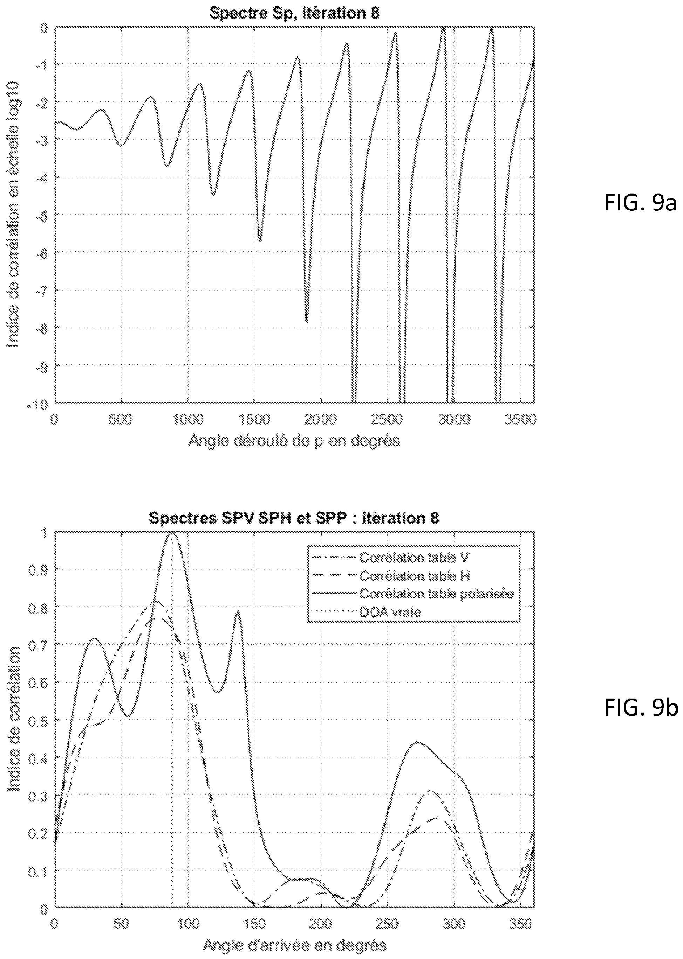

La figure **9a** illustré un nouveau spectre de corrélation *S_{P}* obtenue lors d'une itération d'indice 8, tandis que la figure **9b** illustre les spectres *S_{PV}* et *S_{PH}* obtenues lors de cette itération d'indice 8. Il s'agit de la dernière itération dans cet exemple de réalisation (itération au cours de laquelle le seuil prédéfini est atteint à l'étape 318. On constate qu'à l'issue de cette itération d'indice 8 le maximum du spectre de corrélation *S_{PP}* est extrêmement proche de la vraie direction d'arrivée de l'onde, signe de la très grande précision du procédé mis en œuvre.

Un avantage du procédé décrit précédemment est qu'il permet non seulement d'obtenir une estimée plus précise pour la direction d'arrivée de l'onde électromagnétique au niveau du réseau d'antenne, mais il permet d'obtenir au passage d'obtenir une estimée de la direction de polarisation de l'onde électromagnétique.

Le procédé tel que décrit précédemment peut toutefois faire l'objet de variantes. Bien que cela est très avantageux, la mise en œuvre d'une boucle itérative n'est pas strictement nécessaire. Une mise en œuvre des étapes faisant partie d'une itération de la boucle présentée précédemment peut suffire pour obtenir une estimée affinée de la direction d'arrivée de l'onde électromagnétique reçue.

Par ailleurs, dans le procédé tel que décrit précédemment, les tables de référence *A_{V}* et *A_{H}* sont mises à contribution pour affiner les valeurs des composantes P1 et P2 du vecteur de polarisation, ce qui est très avantageux. Toutefois, il est parfaitement possible de calculer la table de référence *A_{P}* sur la base de composantes P1 et P2 estimées d'une autre manière.

## Revendications

1. Procédé d'estimation de la direction d'arrivée d'une onde électromagnétique à un réseau d'antennes (2) mis en œuvre par ordinateur, l'onde électromagnétique ayant une composante de polarisation dans une première direction et une composante de polarisation dans une deuxième direction différente de la première direction, le procédé comprenant des étapes de :
- estimation (202) d'une matrice de covariance de signaux acquis par le réseau d'antennes (2), les signaux étant issus de l'onde électromagnétique,
- calcul (204) d'un vecteur propre normalisé de la matrice de covariance, le vecteur propre étant associé à une valeur propre de la matrice de covariance,
- corrélation (205) du vecteur propre normalisé avec une première table de référence de sorte à produire un premier spectre de corrélation comprenant des indices de corrélation respectivement associés à différentes directions d'arrivée, la première table de référence comprenant des réponses normalisées du réseau d'antennes (2) à une première onde électromagnétique de référence polarisée dans la première direction respectivement associées à différentes directions d'arrivée de la première onde électromagnétique de référence,
- corrélation (206) du vecteur propre normalisé avec une deuxième table de référence de sorte à produire un deuxième spectre de corrélation comprenant des indices de corrélation respectivement associés à différentes directions d'arrivée, la deuxième table de référence comprenant des réponses normalisées du réseau d'antennes (2) à une deuxième onde électromagnétique de référence polarisée dans la deuxième direction respectivement associées à différentes directions d'arrivée de la deuxième onde électromagnétique de référence,
- sélection (210) d'une direction d'arrivée associée à un indice de corrélation maximal du premier spectre de corrélation ou du deuxième spectre de corrélation,
- construction (304) d'une table de recherche en polarisation à partir d'une première réponse normalisée du réseau d'antennes (2) à la première onde électromagnétique de référence, la première réponse normalisée étant associée dans la première table de référence à la direction d'arrivée sélectionnée, et à partir d'une deuxième réponse normalisée du réseau d'antennes (2) à la deuxième onde électromagnétique de référence, la deuxième réponse normalisée étant associée dans la deuxième table de référence à la direction d'arrivée sélectionnée,
- corrélation (306) du vecteur propre normalisé avec la table de recherche en polarisation, de sorte à obtenir un quatrième spectre de corrélation comprenant des indices de corrélation associés à différentes valeurs d'une variable complexe,
- ajustement (310) de la composante de polarisation de l'onde électromagnétique dans la deuxième direction (P2) à une valeur complexe (p2) associée à un indice de corrélation maximal du quatrième spectre de corrélation, puis normalisation d'un vecteur de polarisation formé par les composantes de polarisation de l'onde électromagnétique dans la première direction et la composante de polarisation de l'onde électromagnétique dans la deuxième direction,
- après la normalisation du vecteur de polarisation, construction (312) d'une troisième table de référence par combinaison linéaire de la première table de référence et de la deuxième table de référence avec respectivement la composante de polarisation (P1) de l'onde électromagnétique dans la première direction et la composante de polarisation (P2) de l'onde électromagnétique dans la deuxième direction,
- corrélation (314) du vecteur propre normalisé avec la troisième table de référence de sorte à produire un troisième spectre de corrélation comprenant des indices de corrélation associés à différentes directions d'arrivée,
- identification (316) d'une direction d'arrivée associée à un indice de corrélation maximal du troisième spectre de corrélation.

2. Procédé selon la revendication 1, dans lequel le premier spectre de corrélation comprend un premier indice de corrélation maximal et deuxième spectre de corrélation comprend un deuxième indice de corrélation maximal, et dans lequel la direction d'arrivée sélectionnée à l'étape de sélection (210) est :
- une direction d'arrivée associée au premier indice de corrélation maximal dans le premier spectre de corrélation, lorsque le premier indice de corrélation maximal est supérieur au deuxième indice de corrélation maximal,
- une direction d'arrivée associée au deuxième indice de corrélation maximal dans le deuxième spectre de corrélation, lorsque le premier indice de corrélation maximal n'est pas supérieur au deuxième indice de corrélation maximal.

3. Procédé selon l'une quelconque des revendications 1 et 2, comprenant la création (302) d'un espace de recherche comprenant différentes valeurs pour la variable complexe, et dans lequel la construction (304) de la table de recherche en polarisation comprend une combinaison linéaire de la première réponse et de la deuxième réponse avec respectivement la composante de polarisation de l'onde électromagnétique dans la première direction et un poids dépendant du module de la deuxième composante de polarisation de l'onde électromagnétique et d'une des différentes valeurs pour la variable complexe, la combinaison linéaire étant répétée pour chacune des différentes valeurs.

4. Procédé selon la revendication 3, comprenant les étapes de :
- mise à jour de la direction d'arrivée sélectionnée à la valeur de la direction d'arrivée identifiée,
- mise à jour de l'espace de recherche en un nouvel espace de recherche incluant la composante de polarisation de l'onde électromagnétique dans la deuxième direction du vecteur de polarisation obtenue à l'issue de l'étape de normalisation, puis
- répétition des étapes de sélection (303), construction (304) d'une table de recherche en polarisation, corrélation (306) du vecteur propre normalisé la table de recherche en polarisation, ajustement (310), construction (312) d'une troisième table de référence *A_{P},* corrélation (314) du vecteur propre normalisé avec la troisième table de référence, et identification (316) d'une direction d'arrivée.

5. Procédé selon la revendication 4, dans lequel l'espace de recherche forme une spirale dans le plan complexe, et la mise à jour de l'espace de recherche comprend une dilatation de la spirale, de sorte que le nouvel espace de recherche forme une nouvelle spirale dans le plan complexe qui est dilatée par rapport à la spirale.

6. Procédé selon l'une quelconque des revendications 4 et 5, comprenant en outre une comparaison entre l'indice de corrélation maximal du troisième spectre de corrélation *S_{PP}* et un seuil prédéfini, ladite répétition n'étant mise en œuvre que si l'indice de corrélation maximal du troisième spectre de corrélation est inférieur au seuil prédéfini.

7. Procédé selon l'une quelconque des revendications précédentes, dans lequel la première direction et la deuxième direction sont orthogonales.

8. Mémoire (8) lisible par ordinateur stockant des instructions exécutables par l'ordinateur pour l'exécution des étapes du procédé selon l'une des revendications précédentes.

9. Dispositif d'estimation (4) de la direction d'arrivée d'une onde électromagnétique à un réseau d'antennes (2), le dispositif d'estimation (4) comprenant au moins un processeur (6) configuré pour mettre en œuvre le procédé selon l'une des revendications 1 à 7.

10. Système (1) comprenant :
- un réseau d'antennes (2) configuré pour acquérir des signaux issus d'une onde électromagnétique,
- un dispositif d'estimation (4) de la direction d'arrivée de l'onde électromagnétique au réseau d'antennes (2) sur la base des signaux, le dispositif d'estimation (4) étant conforme à la revendication 9.

11. Porteur mobile, tel qu'un aéronef, comprenant un système (1) selon la revendication 10.

## Patentansprüche

1. Verfahren zur Schätzung der Einfallsrichtung einer elektromagnetischen Welle in eine computergestützte Antennenanordnung (2), wobei die elektromagnetische Welle eine Polarisationskomponente in einer ersten Richtung und eine Polarisationskomponente in einer zweiten Richtung hat, die sich von der ersten Richtung unterscheidet, wobei das Verfahren folgende Schritte umfasst:
- Schätzen (202) einer Kovarianzmatrix von Signalen, die von der Antennenanordnung (2) erfasst wurden, wobei die Signale von der elektromagnetischen Welle stammen,
- Berechnen (204) eines normierten Eigenvektors der Kovarianzmatrix, wobei der Eigenvektor einem Eigenwert der Kovarianzmatrix zugeordnet ist,
- Korrelieren (205) des normierten Eigenvektors mit einer ersten Referenztabelle, so dass ein erstes Korrelationsspektrum erzeugt wird, das Korrelationsindizes umfasst, die jeweils verschiedenen Einfallsrichtungen zugeordnet sind, wobei die erste Referenztabelle normierte Antworten der Antennenanordnung (2) auf eine erste elektromagnetische Referenzwelle umfasst, die in der ersten Richtung polarisiert ist beziehungsweise verschiedenen Einfallsrichtungen der ersten elektromagnetischen Referenzwelle zugeordnet sind,
- Korrelieren (206) des normierten Eigenvektors mit einer zweiten Referenztabelle, so dass ein zweites Korrelationsspektrum erzeugt wird, das Korrelationsindizes umfasst, die jeweils verschiedenen Einfallsrichtungen zugeordnet sind, wobei die zweite Referenztabelle normierte Antworten der Antennenanordnung (2) auf eine zweite elektromagnetische Referenzwelle umfasst, die in der zweiten Richtung polarisiert ist beziehungsweise verschiedenen Einfallsrichtungen der zweiten elektromagnetischen Referenzwelle zugeordnet sind,
- Auswählen (210) einer Einfallsrichtung, die einem maximalen Korrelationsindex des ersten Korrelationsspektrums oder des zweiten Korrelationsspektrums zugeordnet ist,
- Erstellen (304) einer Polarisationsnachschlagetabelle aus einer ersten normierten Antwort der Antennenanordnung (2) auf die erste elektromagnetische Referenzwelle, wobei die erste normierte Antwort in der ersten Referenztabelle der ausgewählten Einfallsrichtung zugeordnet ist, und aus einer zweiten normierten Antwort der Antennenanordnung (2) auf die zweite elektromagnetische Referenzwelle, wobei die zweite normierte Antwort in der zweiten Referenztabelle der ausgewählten Einfallsrichtung zugeordnet ist,
- Korrelieren (306) des normierten Eigenvektors mit der Polarisationsnachschlagetabelle, um ein viertes Korrelationsspektrum zu erhalten, das Korrelationsindizes umfasst, die verschiedenen Werten einer komplexen Variablen zugeordnet sind,
- Anpassen (310) der Polarisationskomponente der elektromagnetischen Welle in der zweiten Richtung (P2) an einen komplexen Wert (p2), der einem maximalen Korrelationsindex des vierten Korrelationsspektrums zugeordnet ist, dann Normieren eines Polarisationsvektors, der von den Polarisationskomponenten der elektromagnetischen Welle in der ersten Richtung und der Polarisationskomponente der elektromagnetischen Welle in der zweiten Richtung gebildet ist,
- nach der Normierung des Polarisationsvektors, Erstellen (312) einer dritten Referenztabelle durch lineare Kombination der ersten Referenztabelle und der zweiten Referenztabelle mit jeweils der Polarisationskomponente (P1) der elektromagnetischen Welle in der ersten Richtung und der Polarisationskomponente (P2) der elektromagnetischen Welle in der zweiten Richtung,
- Korrelieren (314) des normierten Eigenvektors mit der dritten Referenztabelle, um ein drittes Korrelationsspektrum zu erzeugen, das Korrelationsindizes umfasst, die verschiedenen Einfallsrichtungen zugeordnet sind,
- Identifizieren (316) einer Einfallsrichtung, die einem maximalen Korrelationsindex des dritten Korrelationsspektrums zugeordnet ist.

2. Verfahren nach Anspruch 1, wobei das erste Korrelationsspektrum einen ersten maximalen Korrelationsindex umfasst und das zweite Korrelationsspektrum einen zweiten maximalen Korrelationsindex umfasst und wobei die ausgewählte Einfallsrichtung im Auswahlschritt (210) ist:
- eine Einfallsrichtung, die dem ersten maximalen Korrelationsindex in dem ersten Korrelationsspektrum zugeordnet ist, wenn der erste maximale Korrelationsindex über dem zweiten maximalen Korrelationsindex liegt,
- eine Einfallsrichtung, die dem zweiten maximalen Korrelationsindex in dem zweiten Korrelationsspektrum zugeordnet ist, wenn der erste maximale Korrelationsindex nicht über dem zweiten maximalen Korrelationsindex liegt.

3. Verfahren nach einem der Ansprüche 1 und 2, umfassend die Erzeugung (302) eines Suchraums, der verschiedene Werte für die komplexe Variable umfasst, und wobei die Erstellung (304) der Polarisationsnachschlagetabelle eine lineare Kombination der ersten Antwort und der zweiten Antwort mit jeweils der Polarisationskomponente der elektromagnetischen Welle in der ersten Richtung und ein Gewicht umfasst, das vom dem Modul der zweiten Polarisationskomponente der elektromagnetischen Welle und von einem der verschiedenen Werte für die komplexe Variable abhängt, wobei die lineare Kombination für jeden der verschiedenen Werte wiederholt wird.

4. Verfahren nach Anspruch 3, umfassend die folgenden Schritte:
- Aktualisieren der ausgewählten Einfallsrichtung auf den Wert der identifizierten Einfallsrichtung,
- Aktualisieren des Suchraums in einen neuen Suchraum, der die Polarisationskomponente der elektromagnetischen Welle in der zweiten Richtung des nach dem Normalisierungsschritt erhaltenen Polarisationsvektors einschließt, anschließend
- Wiederholen der Schritte Auswählen (303), Erstellen (304) einer Polarisationsnachschlagetabelle, Korrelieren (306) des normierten Eigenvektors mit der Polarisationsnachschlagetabelle, Anpassen (310), Erstellen (312) einer dritten Referenztabelle *Aₚ*, Korrelieren (314) des normierten Eigenvektors mit der dritten Referenztabelle und Identifizieren (316) einer Einfallsrichtung.

5. Verfahren nach Anspruch 4, wobei der Suchraum eine Spirale in der komplexen Ebene bildet und die Aktualisierung des Suchraums eine Erweiterung der Spirale umfasst, so dass der neue Suchraum eine neue Spirale in der komplexen Ebene bildet, die in Bezug auf die Spirale erweitert ist.

6. Verfahren nach einem der Ansprüche 4 und 5, das ferner einen Vergleich zwischen dem maximalen Korrelationsindex des dritten Korrelationsspektrums *Sₚₚ* und einem vorbestimmten Grenzwert umfasst, wobei die Wiederholung nur dann durchgeführt wird, wenn der maximale Korrelationsindex des dritten Korrelationsspektrums unter dem vorbestimmten Grenzwert liegt.

7. Verfahren nach einem der vorstehenden Ansprüche, wobei die erste Richtung und die zweite Richtung orthogonal sind.

8. Computerlesbarer Speicher (8), der von dem Computer ausführbare Befehle zur Durchführung der Schritte des Verfahrens nach einem der vorstehenden Ansprüche speichert.

9. Vorrichtung (4) zur Schätzung der Einfallsrichtung einer elektromagnetischen Welle in eine Antennenanordnung (2), wobei die Schätzvorrichtung (4) mindestens einen Prozessor (6) umfasst, der dazu konfiguriert ist, das Verfahren nach einem der Ansprüche 1 bis 7 durchzuführen.

10. System (1), umfassend:
- eine Antennenanordnung (2), die dazu konfiguriert ist, Signale einer elektromagnetischen Welle zu erfassen,
- eine Vorrichtung (4) zur Schätzung der Einfallsrichtung der elektromagnetischen Welle in die Antennenanordnung (2) auf der Basis der Signale, wobei die Schätzvorrichtung (4) nach Anspruch 9 ist.

11. Mobiler Träger wie beispielsweise ein Luftfahrzeug, das ein System (1) nach Anspruch 10 umfasst.

## Claims

1. A computer-implemented method of estimating a direction of arrival of an electromagnetic wave at an antenna array (2), the electromagnetic wave having a polarisation component in a first direction and a polarisation component in a second direction different from the first direction, the method comprising:
- estimating (202) a covariance matrix of signals acquired by the antenna array (2), the signals being derived from the electromagnetic wave,
- calculating (204) a normalised eigenvector of the covariance matrix, the eigenvector being associated with an eigenvalue of the covariance matrix,
- correlating (205) the normalised eigenvector with a first reference table so as to produce a first correlation spectrum comprising correlation indices respectively associated with different directions of arrival, the first reference table comprising normalised responses of the antenna array (2) to a first reference electromagnetic wave polarised in the first direction and respectively associated with different directions of arrival of the first reference electromagnetic wave,
- correlating (206) the normalised eigenvector with a second reference table so as to produce a second correlation spectrum comprising correlation indices respectively associated with different directions of arrival, the second reference table comprising normalised responses of the antenna array (2) to a second reference electromagnetic wave polarised in the second direction respectively associated with different directions of arrival of the second reference electromagnetic wave,
- selecting (210) a direction of arrival associated with a maximum correlation index of the first correlation spectrum or of the second correlation spectrum,
- constructing (304) a polarisation lookup table from a first normalised response of the antenna array (2) to the first reference electromagnetic wave, the first normalised response being associated in the first reference table with the selected direction of arrival, and from a second normalised response of the antenna array (2) to the second reference electromagnetic wave, the second normalised response being associated in the second reference table with the selected direction of arrival,
- correlating (306) the normalised eigenvector with the polarisation lookup table, so as to obtain a fourth correlation spectrum comprising correlation indices associated with various values of a complex variable,
- adjusting (310) the polarisation component of the electromagnetic wave in the second direction to a complex value associated with a maximum correlation index of the fourth correlation spectrum, then normalising a polarisation vector formed by the polarisation component (P1) of the electromagnetic wave in the first direction and the polarisation component (P2) of the electromagnetic wave in the second direction,
- after normalizing the polarisation vector, constructing (312) a third reference table by linear combination of the first reference table and the second reference table, with a polarisation component of the electromagnetic wave in the first direction and with a polarisation component of the electromagnetic wave in the second direction, respectively,
- correlating (314) the normalised eigenvector with the third reference table so as to produce a third correlation spectrum comprising correlation indices associated with different directions of arrival,
- identifying (316) a direction of arrival associated with a maximum correlation index of the third correlation spectrum.

2. The method of claim 1, wherein the first correlation spectrum comprises a first maximum correlation index and the second correlation spectrum comprises a second maximum correlation index, and wherein the selected direction of arrival at the selection step (210) is:
- a direction of arrival associated with the first maximum correlation index in the first correlation spectrum whenever the first maximum correlation index is greater than the second maximum correlation index,
- a direction of arrival associated with the second maximum correlation index in the second correlation spectrum whenever the first maximum correlation index is not greater than the second maximum correlation index.

3. The method of any one of claims 1 and 2, comprising creating (302) a lookup space comprising various values for the complex variable, and wherein constructing (304) the polarisation lookup table comprises a linear combination of the first response and second response with respectively the polarisation component of the electromagnetic wave in the first direction and a weighting factor dependent on a modulus of the second polarisation component of the electromagnetic wave and one of the various values for the complex variable, the linear combination being repeated for each of the various values.

4. The method of claim 3, comprising:
- updating the selected direction of arrival to the value of the identified direction of arrival,
- updating the lookup space into a new lookup space including the polarisation component of the electromagnetic wave in the second direction of the polarisation vector obtained at the end of the normalisation step, then
- repeating the steps of selecting (303), constructing (304) a polarisation lookup table, correlating (306) the normalised eigenvector with the polarisation lookup table, adjusting (310), constructing (312) a third reference table, correlating (314) the normalised eigenvector with the third reference table, and identifying (316) a direction of arrival.

5. The method of claim 4, wherein the lookup space forms a spiral in a complex plane, and wherein updating the lookup space comprises expanding the spiral so that the new lookup space forms a new spiral in the complex plane which is expanded with respect to the spiral.

6. The method of any one of claims 4 and 5, further comprising comparing the maximum correlation index of the third correlation spectrum and a predefined threshold, said repetition being carried out only if the maximum correlation index of the third correlation spectrum is less than the predefined threshold.

7. The method of any one of the preceding claims, wherein the first direction and the second direction are orthogonal.

8. A computer-readable memory (8) storing instructions executable by a computer in order to execute the method of any one of the preceding claims.

9. A device (4) for estimating the direction of arrival of an electromagnetic wave at an antenna array (2), the device (4) comprising at least one processor (6) configured to implement the method according to one of claims 1 to 7.

10. A system (1) comprising:
- an antenna array (2) configured to acquire signals being derived from an electromagnetic wave,
- the device (4) of claim 9 for estimating the direction of arrival of the electromagnetic wave at the antenna array (2) on the basis of the signals.

11. A mobile carrier, such as an aircraft, comprising the system (1) of claim 10.
